Europäisches Patentamt

European Patent Office

Office européen des brevets

(19)

(11) Veröffentlichungsnummer : **0 190 410**
**B1**

# (12) EUROPÄISCHE PATENTSCHRIFT

(45) Veröffentlichungstag der Patentschrift :
28.09.88

(51) Int. Cl.⁴ : **E 02 D 19/18**

(21) Anmeldenummer : 85114255.4

(22) Anmeldetag : 08.11.85

(54) Abdichtungsbahn.

(30) Priorität : 07.02.85 DE 3504121

(43) Veröffentlichungstag der Anmeldung :
13.08.86 Patentblatt 86/33

(45) Bekanntmachung des Hinweises auf die Patenterteilung : 28.09.88 Patentblatt 88/39

(84) Benannte Vertragsstaaten :
AT BE CH DE FR GB IT LI NL SE

(56) Entgegenhaltungen :
AT-B- 363 857
DE-A- 1 964 769
DE-B- 1 273 433
US-A- 3 383 863

(73) Patentinhaber : Niederberg-Chemie GmbH
Postfach 11 63
D-4133 Neukirchen-Vluyn (DE)

(72) Erfinder : Schlütter, Aloys
Rheinstrasse 42
D-4152 Kempen 3 (DE)

## Beschreibung

Die Erfindung betrifft eine Abdichtungsbahn insbesondere für Erdschlitze mit einer eingefüllten thixotropen Masse, in die die Abdichtungsbahn abgesenkt wird, wobei die Abdichtung eine Vielzahl nebeneinander angeordneter Kanäle aufweist.

Derartige Erdschlitze bilden Schlitzwände. Als thixotrope Masse kann z. B. Bentonitschlämpe dienen. Das ist eine Tonart. Die thixotrope Masse hat die Aufgabe, die Seitenwände des Erdschlitzes stabil zu halten. Anschließend können Betonplatten aus wasserdichtem Beton eingebracht oder die Bentonitschlämpe mit einem geeigneten Beton so aufgefüllt werden, daß die Schlitzwand in sich wasserdicht bleibt und den Durchtritt angrenzender Flüssigkeiten verhindert. Das Einbringen von Betonplatten bzw. geeignetem Beton wird durch das besondere Verhalten thixotroper Massen erleichtert. Thixotrope Massen bilden in der Ruhelage ein relativ festes Gebilde. D. h. nach Einbringen der Bentonitschlämpe erstarrt diese praktisch in den Erdschlitzen. Durch Anstoßen der Bentonitschlämpe kann diese, wie jede andere thixotrope Masse jedoch wieder fließfähig gemacht werden. Diese Eigenschaft wird beim Einbringen der Betonplatten bzw. geeigneten anderen Betons genutzt. Die Betonplatten sinken dann in der fließfähig werdenden Bentonitschlämpe leicht nach unten.

Je nach Bauvorhaben ergeben sich die unterschiedlichsten Anforderungen an die Breite der Schlitzwände. In einfachsten Fällen sind die Schlitzwände 15-20 cm breit. Es sind jedoch auch Schlitzwände mit einer Dicke von 50 cm und mehr in der Anwendung. Zur Verringerung der Breite der Erdschlitze ist nach einem älteren Vorschlag vorgesehen, in die thixotrope Masse eine Dichtungsbahn abzusenken. Mit der Verwendung von Abdichtungsbahnen stellt sich vor allem bei rauhem Betrieb und der Verwendung kantiger Platten bzw. bei unvorhergesehenen Erdbewegungen jeweils die Frage, inwieweit die Abdichtungsbahnen noch die gewünschte Dichtwirkung gewährleisten. Es ist deshalb bereits vorgeschlagen worden, statt einer Abdichtungsbahn zwei Abdichtungsbahnen so nebeneinander anzuordnen, daß im Falle einer Beschädigung sich zwischen den beiden Abdichtungsbahnen Wasser bzw. Flüssigkeit sammelt, die an einem Durchtritt gehindert werden soll.

Die Verwendung zweier Abdichtungsbahnen zeigt nur ein unbefriedigendes Ergebnis. Die Schwierigkeiten liegen sowohl in der Handhabung als auch im Verhalten der Bahnen beim Einbringen.

Es ist zwar bekannt (siehe AT-A-363 857), in eine Wand eine poröse, miteinander verbundene Poren aufweisende Schicht, insbesondere ein vorzugsweise aus Kunststoff bestehendes Vlies einzubauen, das bei in der Wand eingelegter Dichtfolie auf deren der Flüssigkeit oder flüssigkeitsführenden Schicht abgewendeten Seite aufgelegt ist, wobei in dem an dieser Seite an die poröse Schicht grenzenden Wandteil in Abständen voneinander eine Anzahl von Rohrleitungen oder Flüssigkeitsdetektoren mit gegen die poröse Schicht offenen, z. B. anliegenden Eintrittsöffnungen angeordnet sind. Aus den Leitungen tritt im Falle einer Undichtigkeit Flüssigkeit aus oder wird von einem Flüssigkeitsdetektor angezeigt. Theoretisch erlaubt das eine schnelle und sichere Lokalisierung der Leckstellen. Das ist auch zutreffend für gesicherte Einbauzustände, in denen die Poren des die Flüssigkeit aufnehmenden Vlieses offen sind. Die Öffnung der Poren ist jedoch ungesichert, soweit das Vlies mit thixotropen Massen wie z. B. Bentonit beaufschlagt wird. Das gilt um so mehr, wenn der Bentonit noch mit Zement versetzt ist. Dann ist davon auszugehen, daß die Poren mehr oder weniger zugesetzt sind. Da zeitgemäße Erdschlitze zur Abdichtung wasserführender Schichten üblicherweise mit Bentonit unter Zementzusatz verfüllt werden, ist eine derartige Lösung nicht anwendbar.

Es ist daher Aufgabe der Erfindung, die Sicherung von Abdichtungsbahnen gegen Leckstellen zu verbessern. Nach der Erfindung wird das dadurch erreicht, daß die Abdichtung aus einer einlagigen Abdichtungsbahn mit eingeformten Kanälen besteht, wobei die Kanäle einen Querschnitt zwischen 4 und 8 mm$^2$ aufweisen. Im Falle des Auftretens einer Leckstelle läßt sich anhand der davon betroffenen Kanäle die Leckstelle sehr genau lokalisieren und ein Abdichtungsmittel dementsprechend gezielt zum Einsatz bringen. D. h. im Falle einer Undichtigkeit braucht das Dichtmittel jeweils lediglich in die Kanäle verpreßt werden, die mit Wasser bzw. der am Durchtritt durch die Wand zu hindernden Flüssigkeit gefüllt sind. Das minimiert den erforderlichen Aufwand für das Dichtmittel.

In weiterer Ausbildung der Erfindung werden nur solche Leckstellen aufgezeigt und abgedichtet, die eine substantielle Beeinträchtigung der Dichtwirkung beinhalten. Dies ergibt sich aus der Überdeckung der Abdichtungsbahn mit Kanälen. Dementsprechend ist vorgesehen, daß die Kanäle sich über mindestens 40 % der Fläche der Abdichtungsbahn erstrecken. Vorzugsweise ist jedoch eine Überdeckung von 60 % vorgesehen. Dementsprechend besteht eine 60 %ige Sicherheit, daß im Falle einer Perforation der Abdichtungsbahn mit 60 %iger Sicherheit ein Kanal getroffen wird. Das hat zur Folge, daß Perforationen mit einer Mindestöffnungsweite von 2 mm in jedem Fall einen Hohl kanal treffen, während bei kleineren Perforationen damit zu rechnen ist, daß bei Nichttreffen eines Kanals noch eine wirksame Abdichtung von der thixotropen Umgebungsmasse gewährleistet ist.

Die erfindungsgemäßen Kanäle haben einen Querschnitt in der Größenordnung zwischen 4 und 8 mm$^2$. Diese Öffnungsweite erlaubt es, wirtschaftlich und sicher den Hohlraum mit einem Dichtmedium zu verpressen.

Zur Erfassung der jeweiligen Leckstellen sind in den Kanälen unisolierte elektrische Leiter vorgesehen. Die unisolierten elektrischen Leiter werden vorzugsweise durch Kupferkabel gebildet. Die Kupferkabel ragen z. B. aus den Kanälen vor und sind über eine gemeinsame Leitung mit einem Spannungs- und Signalgeber verbunden. Im Falle eines Eindringens von Wasser in die Abdichtungsbahn führt das zum Fließen eines elektrischen Stromes, der zur optischen oder akustischen Signalanzeige genutzt werden kann.

Bei einer solchen Schadensmeldung ist es vorteilhaft, wenn die Schadensstelle möglichst genau lokalisiert wird. Das kann einerseits dadurch erreicht werden, daß dann die in den Kanälen liegenden elektrischen Leiter von dem gemeinsamen Kabel gelöst und einzeln durch Spannungsaufgabe geprüft werden. In die so festgestellten, an einer Schadstelle liegenden Kanäle wird dann eine Dichtungsmasse verpreßt. Zum Verpressen der Dichtungsmasse ist es vorteilhaft, wenn die Kanäle auch untereinander verbunden sind. Das erhöht die Sicherheit, daß ausreichendes Dichtungsmaterial bis zur Schadstelle gelangt. Zugleich kann die Menge des verwendeten Dichtungsmaterials minimiert werden, indem die Kanäle abschnittsweise unterteilt sind. Das kann wahlweise durch die Verwendung von Bahnenabschnitten und/oder von in Kanalabschnitte unterteilte Abdichtungsbahnen erreicht werden.

Als Dichtungsmaterial dient Kunstharz. Der Preßdruck beträgt 50-150 bar beim Verpressen des Dichtungsmaterials. Gleichwohl kann als Material für die Abdichtungsbahnen ein Kunststoff wie z. B. Polyethylen-Copolymer verwendet werden. Die Abdichtungsbahn behält ihre Form in Folge des Widerstandes der umgebenden thixotropen Masse bzw. des eingebrachten Betons gegen ein Aufblähen der Kanäle.

Besonders geeignet zum Verpressen ist ein Kunstharz mit einer Viskosität zwischen 100 und 300 centipois.

In der Zeichnung sind verschiedene Ausführungsbeispiele der Erfindung dargestellt.

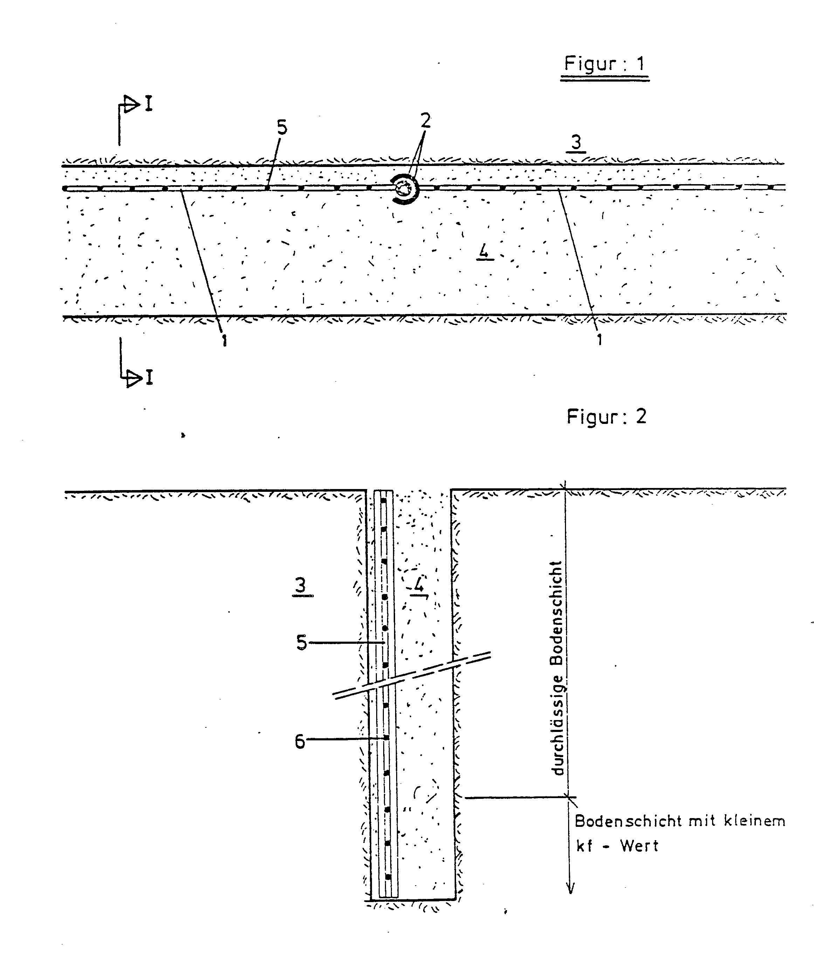

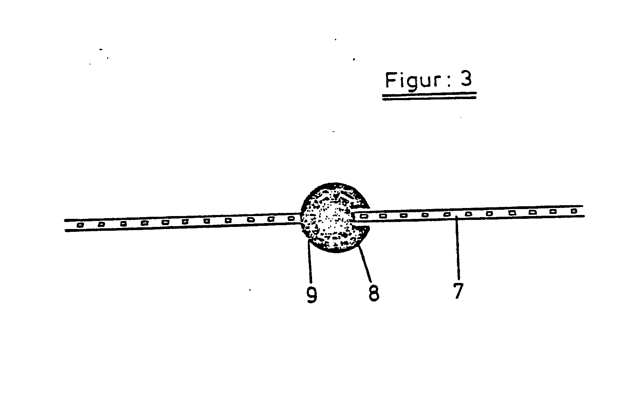

Figuren 1 und 2 zeigen einen Erdschlitz in verschiedenen Ansichten, wobei Figur 2 einen Schnitt entlang der Linie I/I in Figur 1 darstellt. Figur 3 zeigt in vereinfachter Darstellung eine weitere erfindungsgemäße Abdichtungsbahn.

Mit 3 ist das Erdreich bezeichnet. Im Erdreich 3 ist ein Schlitz 4 eingebracht. Der Schlitz 4 entsteht mit Hilfe eines Löffelbaggers oder einer Fräse o. dgl. Werkzeuge. Zur Abdichtung eines wasserhaltenden Teiches reicht der Schlitz bis auf eine wasserundurchlässige Lehmschicht. Nach Ausheben des Schlitzes wird zunächst Bentonit in den Erdschlitz 4 gefüllt. Anschließend wird eine Dichtungsbahn 1 in die Bentonitmasse abgesenkt. Dazu wird die Dichtungsbahn 1 zunächst in die aus Figur 1 ersichtliche Position gebracht, d. h., bei mehrteiliger Ausführung montiert über den Erdschlitz gebracht, es folgt das Absenken. Das Absenken wird bewirkt durch an der Unterseite der Dichtungsbahn angebrachte Stahlprofile oder Betonschienen oder aufgebrachten Spritzbeton.

Nach Figur 1 setzt sich die Abdichtungsbahn aus mehreren Abschnitten zusammen. An der Verbindungsstelle werden die Abschnitte durch ein Verbindungsstück 2 gehalten. Das Verbindungsstück 2 besteht aus einem Kunststoffrohr und einer über das Kunststoffrohr schiebbaren geschlitzten Hülse. Die Öffnungsweite des Schlitzes entspricht der Dicke der an dem innenliegenden Rohr befestigten Abdichtungsbahn und dem notwendigen Spiel zum Aufschieben der Hülse. Hülse und Rohr sind durch Verschweißen an ihren zugehörigen Abdichtungsbahnabschnitten befestigt.

Die Abdichtungsbahn besteht aus einem copolymer-ethylenhaltigen Kunststoff. Die Abdichtungsbahn ist einlagig. In die Abdichtungsbahn sind jedoch Kanäle 5 eingeformt. Die Kanäle 5 sind Vertikalkanäle. Die Kanäle 5 entstehen mit der Herstellung der Abdichtungsbahn, d. h. bei dem üblichen Extrudieren solcher Abdichtungsbahnen. Dazu ist der vorgesehene Extruder ausgangsseitig mit einer entsprechenden Matrize versehen. Wahlweise können auch zwei Bahnen, die an den gegenüberliegenden Seiten entsprechend profiliert sind, miteinander verschweißt werden.

Nach Figur 2 sind die vertikalen Kanäle darüberhinaus mit horizontal verlaufenden Kanälen 6 verbunden. In den vertikal verlaufenden Kanälen 5 befinden sich feine Kupferdrähte, die oben an ein gemeinsames Kabel angeklemmt oder angelötet sind. Die feinen Kupferdrähte sind unisoliert. Lediglich die aus der Abdichtungsbahn ragenden Enden sind isoliert bzw. das gemeinsame Kabel ist isoliert. Ferner sind das obere und untere Ende der Abdichtungsbahn verschlossen. Die Isolierung der aus den Kanälen 5 herausführenden Kupferdrahtenden kann auch dadurch erreicht werden, daß die Kupferdrahtenden beim Verschließen des zugehörenden Abdichtungsbahnendes mit in diese eingeschweißt werden.

Die Kupferdrähte sind an einen Spannungsgeber angeschlossen. Im Falle einer Undichtigkeit der Abdichtungsbahn 1 und eines Eindringens von Flüssigkeit entsteht ein Strom, der in ein optisches und/oder akustisches Signal umgesetzt wird.

Für eine Lokalisierung der Schadstelle ist es vorteilhaft, wenn die einzelnen Abdichtungsbahnabschnitte separat geprüft werden können. Das gilt darüberhinaus für eine Prüfung der einzelnen Kupferdrähte. Die separate Prüfung erfolgt nach Lösen der jeweiligen Kupferdrahtenden und deren Beaufschlagung mit Spannung.

Die als schadhaft lokalisierten Kanäle werden mit Kunststoff verpreßt. Das erfolgt bei einem Preßdruck zwischen 50 und 150 bar in Abhängigkeit von der Viskosität des Kunstharzes. Diese liegt zwischen 100 und 300 centipois.

Figur 3 zeigt eine Abdichtungsbahn 7, deren Abschnitte wie nach Figuren 1 und 2 durch ein Verbindungsstück aneinander gehalten werden. Im Unterschied zu Figur 1 und 2 besteht das Verbindungsstück jedoch aus einem Strangmaterial 8 und einer Hülse 9. Die Hülse 9 hat innen in Längsrichtung verlaufende Nuten. Passend zu diesen Nuten ist das Strangmaterial außen mit Stegen versehen, so daß das Strangmaterial nach Art einer Vielkeilwelle in die mit Nuten versehene Hülse des benachbarten Abdichtungsbahnabschnittes eingeführt werden kann und darin abwärts gleitet. Ein solches Nut-/Federsystem gewährleistet die Dichtung der Rohrverbindung und dient gleichzeitig der Aussteifung der Elemente untereinander. Die Durchmesser der Hülse und des Strangmaterials 8 sind derart aufeinander abgestimmt, daß das innenliegende Rohr eine Art Keilwirkung auf das äußere Rohr ausübt und damit die aufgesetzten Keile fest in die Nut eingepreßt werden. Auf diese Weise entsteht eine Labyrinthdichtung.

Trotz der so vorgesehenen Preßpassung zwischen Strangmaterial 8 und Hülse 9 läßt sich das Strangmaterial 8 aufgrund der Beschaffenheit des Werkstoffes Polyethylen leicht in Hülse 9 schieben. Polyethylen hat die Besonderheit, bei höherem Druck eine höhere Gleitwirkung zu entwickeln.

Die Abschnitte der aus Figuren 1 bis 3 ersichtlichen Abdichtungsbahn sind wahlweise zwischen 0,5 und 2 mm lang und haben eine der Tiefe des Erdschlitzes entsprechende Höhe.

Wahlweise wird die Abdichtungsbahn nach Fig. 1 bis 3 auch auf Deponien oder dergleichen angewendet, wo es gilt, kontaminiertes Wasser am Abfließen und Vermischen mit Grundwasser zu verhindern.

**Patentansprüche**

1. Abdichtung für Erdschlitze mit einer eingefüllten thixotropen Masse, in die die Abdichtung abgesenkt wird, wobei die Abdichtung eine Vielzahl nebeneinander angeordneter Kanäle aufweist, dadurch gekennzeichnet, daß die Abdichtung aus einer einlagigen Abdichtungsbahn mit eingeformten Kanälen besteht, wobei die Kanäle einen Querschnitt zwischen 4 und 8 mm² aufweisen.

2. Abdichtung nach Anspruch 1, dadurch gekennzeichnet, daß die Kanäle mit Kunstharz verpreßbar sind.

**Claims**

1. Seal for earth trenches filled with a thixotropic material into which the seal is lowered, the seal comprising a plurality of ducts disposed adjacent to one another, characterized in that the seal consists of a single-layer impermeable sheet with integrally formed ducts, the ducts having a cross-section between 4 and 8 mm².

2. Seal according to claim 1, characterized in that the ducts can be grouted (injected) with synthetic resin.

**Revendications**

1. Elément d'étanchéité pour tranchées remplies d'une masse thixotrope dans laquelle on enfonce l'élément d'étanchéité, ce dernier présentant plusieurs canaux disposés l'un à côté de l'autre, caractérisé en ce que cet élément d'étanchéité se compose d'une feuille d'étanchéité monocouche avec canaux formés dans la masse, lesdits canaux présentant une section comprise entre 4 et 8 mm².

2. Elément d'étanchéité conforme à la revendication 1, caractérisé en ce que l'on peut injecter de la matière plastique sous pression dans les canaux.

**0 190 410**

Figur : 1

Figur : 2

durchlässige Bodenschicht

Bodenschicht mit kleinem kf - Wert

Figur: 3

9   8   7